Europäisches Patentamt

European Patent Office

Office européen des brevets

(19)

(11) Publication number: **0 136 166**
A1

## (12) EUROPEAN PATENT APPLICATION

(21) Application number: **84306509.5**

(22) Date of filing: **24.09.84**

(51) Int. Cl.⁴: **B 60 R 22/20**

(30) Priority: **27.09.83 GB 8325844**

(43) Date of publication of application: **03.04.85**
Bulletin 85/14

(84) Designated Contracting States: **AT DE FR GB IT NL SE**

(71) Applicant: **ASE (UK) LIMITED, Norfolk Street, Carlisle Cumbria CA2 5HX (GB)**

(72) Inventor: **Anderson, Alexander Barrie, 7 Lazonby Terrace, Carlisle Cumbria (GB)**

(74) Representative: **Jones, Ian et al, POLLAK MERCER & TENCH High Holborn House 52-54 High Holborn, London WC1V 6RY (GB)**

(54) Vehicle seat belt system.

(57) An adjustable shoulder anchorage for a vehicle safety belt has a guideway (2; 102) along which a carriage (4; 104) supporting a running loop for the belt can be moved between selected positions. The carriage position is sensed by microswitches (34, 35) co-operating with guideway formations (40, 41, 42) and is indicated by a display device (50) at the vehicle dashboard. In another arrangement, the carriage movement is effected by an electric motor (160) driving a screw-threaded shaft (162) received in a nut secured to the carriage.

Carriage position is sensed and displayed as before and provision may be made for microprocessor control, with facilities for storing signals representing preferred carriage positions.

EP 0 136 166 A1

ACTORUM AG

VEHICLE SEAT BELT SYSTEM

DESCRIPTION

The invention relates to a vehicle seat belt system and more specifically to such a system in which a seat belt extends in use diagonally downward across the user's torso from an anchorage position which is selectively adjustable.

Shoulder anchorages allowing selective adjustment of the level of the position from which the shoulder belt descends, are known as from UK Patent Specification 1 367 248 but this anchorage needs manual manipulation at the position of the anchorage. Moreover, a system including this anchorage affords no convenient indication of the position to which the anchorage has been adjusted.

The invention accordingly provides a vehicle seat belt system comprising an adjustable shoulder anchorage for the seat belt and a device for indicating the position of the anchorage, the anchorage comprising a support for the belt selectively adjustable between at least two positions, and the indicating device comprising means responsive to the position of the support to cause a display device to indicate the selected position.

Preferably the display device is located on the dashboard so as to be easily seen by the user. The device can comprise a column of LEDs (light emitting diodes) of which one is arranged to be illuminated at a

-2-

position on the column indicative of the selected anchorage position. The anchorage can conveniently comprise a support or carriage slidable within a fixed guideway to a selected position, one of the support and the guideway carrying electrical means arranged to change condition in dependence on the physical relationship between the electrical means and co-operating means carried by the other of the support and the guideway. In a simple embodiment of the invention, the guideway can carry switching operated by the means on the support or vice versa but proximity sensors and other means of obtaining a signal or signals indicating the support position can be employed.

The invention also provides a vehicle seat belt system comprising a shoulder support for the seat belt the position of which can be adjusted and means for effecting movement of the shoulder support position indirectly, as by manually operable means other than the support itself or by means responsive to operation of remote located control means.

The system can thus comprise a support for the seat belt movable along a track, and motor means for moving the support along the track under control of control means located for example on the vehicle dashboard. The support can be movable to any freely chosen position or to a selected one of a plurality of predetermined positions, and provision may be made for selective adjustment of these predetermined positions for example to suit the different shoulder heights of different frequent occupants of the associated vehicle seat. The actual position of the support can thus be sensed electrically and the means for moving the support driven until a desired position is sensed. The system can if desired incorporate a display device to indicate the actual or the required support position, or both as long as coincidence has not been achieved.

-3-

The invention is further described below with reference to the accompanying drawing, in which:

Figures 1 and 2 are views from opposite sides

-4-

respectively of an adjustable shoulder anchorage for a vehicle seat belt system in accordance with the invention;

Figure 3 is a schematic circuit drawing of the system of Figure 1;

Figure 4 schematically shows a display device of the system;

Figure 5 is a view similar to that of Figure 2 of a second adjustable shoulder anchorage embodying the invention.

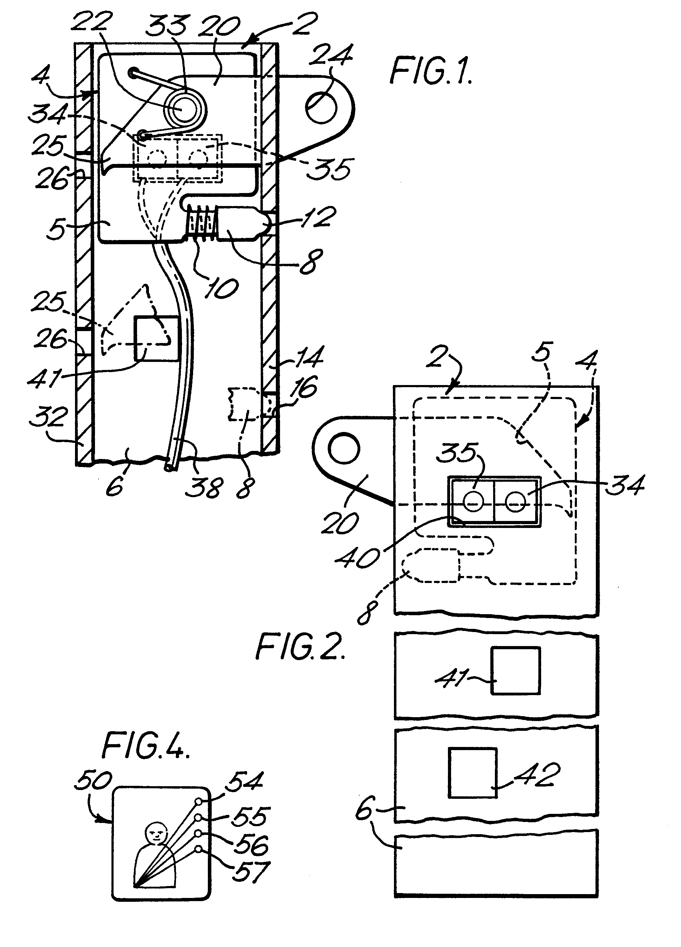

The adjustable shoulder anchorage of Figures 1 and 2 comprises a channel-shaped guideway 2 secured upright in use in a vehicle along a desired range of positions from which a shoulder or diagonal belt is to extend diagonally downwardly across the torso of the user to one part of a two part buckle from which a lap portion of the belt can extend across the user's lap to a vehicle anchorage positioned below the adjustable anchorage. A carriage 4 comprising a plate 5 extending parallel to the centre web 6 of the guideway 2 is slidable within the guideway to a selected one of four locking positions of which only two are shown in Figure 1. The carriage 4 mounts a plunger 8 biassed by a spring 10 to engage a formation in the form of an aperture 12 in a side web 14 of the guideway 2 in the uppermost position shown. Successively lower preset positions are defined by like apertures 16 in the side web 14 for receiving the plunger 8.

For supporting the seat belt, the carriage 4 mounts a plate-like arm 20 for pivotation about a pivot pin 22. One end of the arm 20 extends outwardly of the guideway 2 through a slot in the side web 14 and is apertured at 24 for attachment of the upper end of the shoulder belt or of a running loop (not shown) for the belt which then extends upwardly to the loop from an emergency locking retractor and downwardly from it across the torso of the user. The other end of the arm 20 is formed with a

tooth 25 engageable, in each locking position of the carriage, with a respective one of formations in the form of apertures 26 in the other side web 32 of the guideway. A spring 33 normally biasses the arm 20 so that the tooth 25 is held clear of the side web 32 and the carriage 4 can then be manually moved from one position to another by ratcheting the plunger 8 from one aperture in the side web 14 to that defining the desired position. In an emergency, a pull on the belt will tend to pivot the arm 20 sufficiently to overcome the bias of the spring 33 so that the tooth 25 engages the adjacent aperture 26 in the side web 32. The carriage 4 is thus securely locked to the guideway 2 and thus to the vehicle.

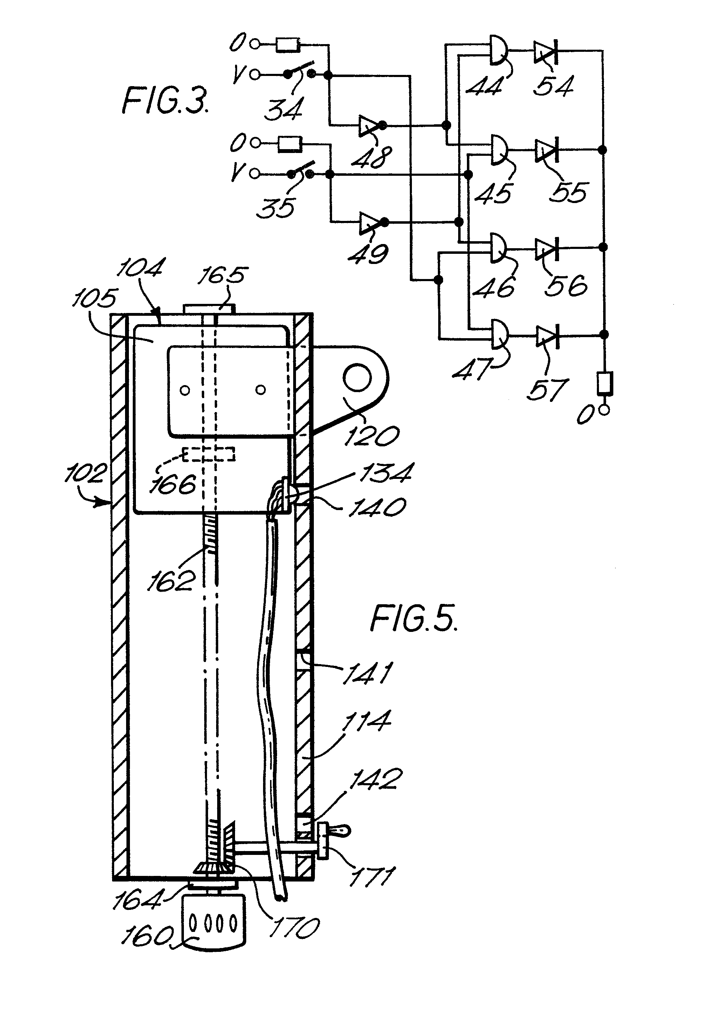

To afford an indication of the position of the carriage 4, the plate 5 carries adjacent the guideway centre web 6 two microswitches 34 and 35 aligned transversely of the guideway. Flexible wiring 38 connects the switches into the circuit illustrated in Figure 3 which is powered by a battery, conveniently the vehicle battery. Co-operating mechanically with the micro-switches 34 and 35 are apertures 40,41 and 42 in the centre web 6.

The micro-switches 34 and 35 are biassed to the open position and the aperture 40, into which the operating portions of the switches extend in the upper position of the carriage 4, is such that both switches are open as shown in Figure 3. When moved down to the next position, only switch 34 registers with the aperture 41 which is narrower than the aperture 40 so that switch 35 is engaged by the web 6 and held closed. In the next lower position, only the switch 35 is open switch 34 being closed. No web aperture is associated with the lowest position so both switches 34 and 35 are then closed.

As shown in Figure 3, each of the switches 34,35 controls application of the supply voltage V to a junction with a source of zero (or low) volts and with connections to two of four AND gates 44,45,46 and 47 directly and to the other two AND gates through a respective inverter 48,49. The outputs of the AND gates control energization of respective LED's 54,55,56 and 57. These LEDs are incorporated in a display device 50 on the vehicle dashboard in a vertical column. With the carriage 4 in its top position, both switches are open so only the AND gate 44 has a high level voltage at both inputs and therefore only the uppermost LED 54 is illuminated, to thereby indicate the carriage position. In the next lower carriage position, AND gate 45 only has two high level inputs and so only the next lower LED 55 is illuminated. In the next carriage position below and in the lowest position the AND gates 46 and 47 respectively receive two high level inputs with consequent illumination of LEDs 56 and 57.

It will be evident that more than the two switches 34 and 35 can be provided to permit more preset positions to be signalled to the display device. If only three positions are to be indicated it can be arranged that both switches are closed during movement between the set positions, and the resulting signals can be employed to indicate that the support has not been correctly located at any preset locking position.

In the second system embodying the invention, shown in Figure 5, a carriage 104 is slidable along a guideway 102 and mounts two switches 134, of which only one is shown, co-operable with apertures 140,141 and 142 in the guideway side web 114 in a manner similar to the co-operation of switches 34,35 with apertures 40,41 and 42. The carriage comprises a plate 105 with a plate 120 constituting a seat belt support fixedly secured thereto to project outwardly through a slot in the side web 114.

The carriage 104 is movable in the guideway 102 by an electro-mechanical drive arrangement powered by a reversible electric motor 160. The output shaft of the motor 160 drives, directly or through a suitable gear system, a shaft 162 which is freely journalled in bearings 164 and 165 at the ends of the guideway 102 so as to extend longitudinally thereof. Between the bearings 164 and 165, the shaft 162 is screw-threaded and is received in meshed relationship in a tapped aperture in a portion 166 of the carriage 104. The motor 160 is controlled by control means which can be located conveniently for operation by the user for example on the vehicle dashboard.

To effect adjustment, the control means is operated to effect rotation of the motor 160 in the direction appropriate to the desired direction of movement of the carriage 104. The signals obtained from the switches 134 are used to control illumination of a display device such as the device 50 but can instead or as well be employed to exercise a control function on the motor 160. Thus the control means can comprise means for selectively designating a particular desired carriage position and the motor 160 is operated accordingly until stopped by a signal generated in response to actuation of appropriate switch means when the selected carriage position has been reached.

The anchorage shown in Figure 5 also contains means for effecting manual movement of the carriage, in the form of a bevel gear drive 170 by which rotation of a handle 171 effects rotation of the shaft 162. The means by which the shaft 162 can be manually rotated can be located remotely from the anchorage if preferred, connection to the shaft being made by a suitable intermediate drive connection.

The position of the carriage 104 can be sensed for display and/or control purposes otherwise than by use of the switches 134, for example, by means of a linear or rotational potentiometer, and the carriage position can

-8-

be infinitely adjustable instead of adjustable to preset positions. Control of the motor 160 or other adjusting means can then be by way of a microprocessor with facilities for storing data identifying positions, which data may be variable by the user. Thus, when preferred anchorage positions for two or more users of the system have been determined by trial, each can be entered into the microprocessor store so that the selected one of these positions can be reached by entry into the microprocessor through the control means of a signal code associated with that position.

It will be evident that the invention can be embodied in a variety of ways other than as specifically described.

CLAIMS

1. A vehicle seat belt system comprising an anchorage for the seat belt, the anchorage comprising a support for the belt selectively movable between at least two positions, and means responsive to the condition of the anchorage to cause a display device to indicate the position of the support.

2. A vehicle seat belt system according to claim 1 wherein the anchorage comprises a carriage on which the support is mounted and a track along which the carriage is movable to a selected position, the condition responsive means being responsive to the position of the carriage along the track.

3. A vehicle seat belt system according to claim 2 wherein the condition responsive means is arranged to cause the display device to indicate that the carriage is at a particular one of a plurality of predetermined positions along the track.

4. A vehicle seat belt system according to claim 3 wherein the condition responsive means is arranged to cause the display device to indicate that the carriage is not at one of the predetermined positions.

5. A vehicle seat belt system according to claim 3 or 4 wherein the  display device comprises a column of L.E.D.s each arranged to be illuminated to indicate that the carriage is an associated one of the predetermined positions.

6. A vehicle seat belt system according to claim 2, 3, 4 or 5 wherein the condition responsive means comprises one or more microswitches on one of the carriage and the track and formations co-operable with the microswtich or microswitches located on the other of the carriage and the track.

7. A vehicle seat belt system according to claim 6 wherein the carriage has a plurality of microswitches mounted thereon and wherein the formations comprise holes spaced along a wall of the track at positions corresponding to predetermined positions of the belt support.

8. A vehicle seat belt system according to any preceding claim in a road vehicle and wherein the display device is located on the vehicle dashboard.

9. A vehicle seat belt system according to any preceding claim including means operable remotely from the anchorage for selectively moving the support.

10. A vehicle seat belt system comprising an anchorage for the seat belt, the anchorage comprising a support for the belt from which the belt can extend downwardly across a user thereof, the support being movable between at least two vertically spaced positions, and adjustment means operable remotely from the anchorage for selectively moving the support.

11. A vehicle seat belt system according to claim 10 wherein the anchorage comprises a carriage on which the support is mounted and a track along which the carriage is movable to a selected position, and wherein the adjustment means comprises electrically powered drive means for reversibly driving the carriage along the track under control of a remotely located control switching.

12. A vehicle seat belt system according to claim 10 wherein the drive means comprises a reversible electric motor arranged to rotate a screw-threaded shaft extending longitudinally of the track and meshing with a nut fixed to the carriage.

13. A vehicle seat belt system according to claim 11 or 12 including means responsive to the position of the carriage to provide a signal indicative of the carriage position.

14. A vehicle seat belt system according to claim 13 wherein the signal is employed to disable the adjustment means when a predetermined carriage position

-11-

has been reached and/or to cause a display device to indicate the carriage position.

15. A vehicle seat belt system according to claim 11, 12, 13 or 14 including means whereby one or more carriage positions can be selectively preset.

16. A vehicle seat belt system according to any one of claims 10-15 wherein the adjustment means comprises mechanical drive means manually operable to move the support.

0136166

1/2

FIG.1.

FIG.2.

FIG.4.

FIG.3.

FIG.5.

0136166

European Patent
Office

**EUROPEAN SEARCH REPORT**

. Application number

EP 84 30 6509

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 086 633 (KANGOL) <br> * Whole document * | 1 | B 60 R 22/20 |
| A | FR-A-2 484 343 (RENAULT) <br> * Whole document * | 1 | |
| E | EP-A-0 092 105 (B.M.W.) <br> * Whole document * | 1 | |

| | | | TECHNICAL FIELDS SEARCHED (Int. Cl.4) |
|---|---|---|---|
| | | | B 60 R 21/00 |

The present search report has been drawn up for all claims

| Place of search THE HAGUE | Date of completion of the search 20-11-1984 | Examiner HEROUAN E. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    
& : member of the same patent family, corresponding
    document

EPO Form 1503 03 82